# EUROPÄISCHE PATENTANMELDUNG

(11) **EP 3 764 178 A1**
(43) Veröffentlichungstag der Anmeldung: **13.01.2021**
(21) Anmeldenummer: 19184953.8
(22) Anmeldetag: 08.07.2019
(51) Int. Cl.: G05B 19/418

(54) **VERFAHREN ZUM INTEGRIEREN EINER MASCHINE ODER EINES MODULS, SCHNITTSTELLE ZUR INTEGRATION, COMPUTERPROGRAMM UND COMPUTERLESBARES MEDIUM**

(71) Anmelder: Siemens Aktiengesellschaft, 80333 München (DE)
(72) Erfinder: Maurmaier, Mathias, 70839 Gerlingen (DE); Neidig, Jörg, 90409 Nürnberg (DE); Peschke, Jörn, 90489 Nürnberg (DE); Wurm, Kai, 81739 München (DE)

(57) **Zusammenfassung**

Die Erfindung betrifft ein Verfahren zum Integrieren einer Maschine (2) bzw. eines Moduls, die bzw. das wenigstens eine industrielle Automatisierungsaufgabe ausführen kann bzw. ausführt, in ein überlagertes Orchestrierungs-System (1), insbesondere zur Laufzeit, bei dem für eine in ein Orchestrierungs-System (1) zu integrierende Maschine (2) bzw. ein in ein Orchestrierungs-System zu integrierendes Modul ein Plugin (4) bereitgestellt wird, das einerseits für die Maschine (2) bzw. das Modul und andererseits für die Ausgestaltung und/oder Einrichtung des Orchestrierungs-Systems (1) spezifisch und dazu ausgebildet ist, gegebenenfalls im Anschluss an eine Parametrierung und/oder Konfigurierung durch einen Benutzer, eine Anpassung zwischen einer der Maschine (2) oder dem Modul zugeordneten Maschinen-Schnittstelle (9) und einer dem Orchestrierungs-System (1) zugeordnete System-Schnittstelle (5) zu realisieren. Darüber hinaus betrifft die Erfindung eine Schnittstelle (13) zur Integration einer Maschine (2) oder eines Moduls, ein Orchestrierungs-System (1) für eine industrielle Automatisierungsanlage, eine Maschine (2) bzw. ein Modul zum Ausführen wenigstens einer industrielle Automatisierungsaufgabe, ein industrielle Automatisierungsanlage, ein Computerprogramm und ein computerlesbares Medium.

## Beschreibung

Die Erfindung betrifft ein Verfahren zum Integrieren einer Maschine oder eines Moduls, die bzw. das wenigstens eine industrielle Automatisierungsaufgabe ausführen kann bzw. ausführt, in ein überlagertes Orchestrierungs-System. Darüber hinaus betrifft die Erfindung eine Schnittstelle zur Integration einer Maschine oder eines Moduls, ein Orchestrierungs-System für eine industrielle Automatisierungsanlage, eine Maschine bzw. ein Modul zum Ausführen wenigstens einer industrielle Automatisierungsaufgabe, ein industrielle Automatisierungsanlage, ein Computerprogramm und ein computerlesbares Medium.

Maschinen aus dem Bereich der industriellen Automatisierungstechnik werden zunehmend mit mehr eigener Intelligenz ausgerüstet, insbesondere, um innerhalb eines gewissen Rahmens autonom Entscheidungen treffen zu können, um ihre Produktionsaufgaben auszuführen. Die konkreten Produktionsaufgaben können in einem übergeordneten Orchestrierungs-System als BoP (Bill of Process) oder in verfahrenstechnischen Anlagen als Rezepte geplant werden. Die Herausforderung besteht darin, die Produktion so zu planen, dass sie mit den verfügbaren Maschinen möglichst optimal hinsichtlich einer Vielzahl von Kriterien ausgeführt werden kann. Als Beispiel für solche Kriterien seien die Kosten, die Zeit der Energiebedarf usw. genannt. Die autonomen/intelligenten Maschinen bzw. Module sollen zur Laufzeit in ein überlagertes Orchestrierungs-System, bei dem es sich beispielsweise um ein Manufacturing-Execution-System, kurz MES, oder Batch-System handeln kann, integriert werden.

Die Integration zur Laufzeit kann über eine Standardisierte Laufzeit-Schnittstelle (auch Runtime-Schnittstelle genannt) erfolgen, wie es beispielsweise in VDI/VDE/NAMUR 2658 beschrieben ist. Dazu ist es jedoch erforderlich, dass die autonome/intelligente Maschine bzw. das autonome/intelligente Modul genau die dazu passende standardisierte Laufzeit-Schnittstelle auf der Gegenseite implementiert. Die Schnittstelle beim MES und bei der Maschine müssen zusammen passen. Bereits für den Fall, dass nur kleine maschinenspezifische Ergänzungen implementiert sind, ist eine Integration über standardisierte Laufzeit-Schnittstellen nicht mehr möglich. Maschinenspezifische Erweiterungen oder Interaktionsmechanismen können dann nicht mehr genutzt werden. Auch hat der Ansatz der Nutzung standardisierter Laufzeit-Schnittstellen die Limitierung, dass die Fähigkeiten der Maschine bzw. des Moduls nur mit den Mitteln des entsprechenden Standards beschrieben werden können.

Es kann jedoch durchaus erforderlich bzw. vorteilhaft sein, Maschinen bzw. Module mit spezifischen Fähigkeiten auszustatten, für die ein direktes Ansprechen über standardisierte Schnittstellen nicht möglich ist.

Sofern ein Maschinenbauer mehr als einen Integrationsstandard unterstützen möchte, um mehr Flexibilität zu bieten, beispielsweise OMAC, Weihenstephan und VDI/VDE/NAMUR 2658, muss er eine Maschine für jeden zu unterstützenden Standard anpassen, was mit großem Aufwand verbunden ist.

Ausgehend davon ist es eine Aufgabe der vorliegenden Erfindung, eine Möglichkeit zu schaffen, Maschinen bzw. Module mit spezifischen Fähigkeiten flexibel in verschiedene Arten überlagerter Orchestrierungs-Systeme mit vertretbarem Aufwand zu integrieren.

Diese Aufgabe wird gelöst durch ein Verfahren zum Integrieren einer Maschine bzw. eines Moduls, die bzw. das wenigstens eine industrielle Automatisierungsaufgabe ausführen kann bzw. ausführt, in ein überlagertes Orchestrierungs-System, insbesondere zur Laufzeit, bei dem
a) für eine in ein Orchestrierungs-System zu integrierende Maschine bzw. ein in ein Orchestrierungs-System zu integrierendes Modul ein Plugin bereitgestellt wird, das einerseits für die Maschine bzw. das Modul und andererseits für die Ausgestaltung und/oder Einrichtung des Orchestrierungs-Systems spezifisch und dazu ausgebildet ist, gegebenenfalls im Anschluss an eine Parametrierung und/oder Konfigurierung durch einen Benutzer, eine Anpassung zwischen einer der Maschine oder dem Modul zugeordneten Maschinen-Schnittstelle und einer dem Orchestrierungs-System zugeordnete System-Schnittstelle zu realisieren,
b) das Plugin ausgeführt wird, und von dem Plugin wenigstens ein für die Maschine bzw. das Modul spezifischer Zustand in wenigstens einen für die Ausgestaltung und/oder Einrichtung des Orchestrierungs-Systems spezifischen Zustand konvertiert wird und/oder umgekehrt, und/oder von dem Plugin wenigstens eine für die Maschine bzw. das Modul spezifische Datenstruktur in wenigstens eine für die Ausgestaltung und/oder Einrichtung des Orchestrierungs-Systems spezifische Datenstruktur konvertiert wird und/oder umgekehrt,
   und/oder von dem Plugin für die Maschine bzw. das Modul spezifische Kommunikationsparadigmen auf für die Ausgestaltung und/oder Einrichtung des Orchestrierungs-Systems spezifische Kommunikationsparadigmen abgebildet werden,
   und/oder von dem Plugin eine Funktionsschnittstelle, die Funktionsaufrufe des Orchestrierungs-Systems in Funktionsaufrufe für die Maschine bzw. das Modul übersetzt und/oder umgekehrt, implementier wird.

Die Aufgabe wird darüber hinaus gelöst durch eine Schnittstelle zur Integration einer Maschine oder eines Moduls, die bzw. das wenigstens eine industrielle Automatisierungsaufgabe ausführen kann bzw. ausführt, in ein überlagertes Orchestrierungs-System, insbesondere zur Laufzeit, umfassend ein Plugin, das einerseits für die Ausgestaltung und/oder Einrichtung eines Orchestrierungs-Systems und andererseits für eine in das Orchestrierungs-System zu integrierende Maschine bzw. ein in das Orchestrierungs-System zu integrierendes Modul spezifisch und dazu ausgebildet ist, gegebenenfalls im Anschluss an eine Parametrierung und/oder Konfigurierung durch einen Benutzer eine Anpassung zwischen einer der Maschine oder dem Modul zugeordneten Maschinen-Schnittstelle und einer dem Orchestrierungs-System zugeordnete System-Schnittstelle zu realisieren, wobei das Plugin dazu ausgebildet ist,
gegebenenfalls im Anschluss an eine Parametrierung und/oder Konfigurierung durch einen Benutzer,
wenigstens einen für die Maschine bzw. das Modul spezifischer Zustand in wenigstens einen für die Ausgestaltung und/oder Einrichtung des Orchestrierungs-Systems spezifischen Zustand zu konvertieren und/oder umgekehrt,
und/oder von wenigstens eine für die Maschine bzw. das Modul spezifische Datenstruktur in wenigstens eine für die Ausgestaltung und/oder Einrichtung des Orchestrierungs-Systems spezifische Datenstruktur zu konvertieren und/oder umgekehrt, und/oder von für die Maschine bzw. das Modul spezifische Kommunikationsparadigmen auf für die Ausgestaltung und/oder Einrichtung des Orchestrierungs-Systems spezifische Kommunikationsparadigmen abzubilden, und/oder eine Funktionsschnittstelle, die Funktionsaufrufe des Orchestrierungs-Systems in Funktionsaufrufe für die Maschine bzw. das Modul übersetzt und/oder umgekehrt, zu implementieren.

Es kann vorgesehen sein, dass eine Bibliothek mit zwei oder mehr Plugins bereitgestellt und das für den konkreten Anwendungsfall, insbesondere für das konkrete Orchestrierungs-System bzw. für einen konkret vom Orchestrierungs-System genutzten/implementierten Standard und/oder die Maschine bzw. das Modul benötigte Plugin ausgewählt und ausgeführt wird. Zweckmäßiger Weise ist jedes Plugin der Bibliothek einerseits für eine Art von Maschine/Modul bzw. die Ausgestaltung und/oder Einrichtung einer Maschine bzw. eines Moduls spezifisch und andererseits für die Ausgestaltung und/oder Einrichtung eines Orchestrierungs-Systems.

In bevorzugter Weiterbildung des Verfahrens wird entsprechend in Schritt a) eine Plugin-Bibliothek mit mehreren Plugins bereitgestellt, wobei für zwei oder mehr der Plugins der Bibliothek gilt, dass sie einerseits für die zu integrierende Maschine bzw. das zu integrierende Modul und andererseits jeweils für ein anders ausgebildet und/oder eingerichtetes Orchestrierungs-System spezifisch und dazu ausgebildet sind, gegebenenfalls im Anschluss an eine Parametrierung und/oder Konfigurierung durch einen Benutzer, eine Anpassung zwischen einer der Maschine oder dem Modul zugeordneten Maschinen-Schnittstelle und einer dem jeweiligen Orchestrierungs-System zugeordneten System-Schnittstelle zu realisieren, und in Schritt b) von den für die zu integrierende Maschine bzw. für das integrierende Modul spezifischen Plugins der Bibliothek dasjenige Plugin ausgeführt wird, welches für dasjenige Orchestrierungs-System spezifisch ist, in das die Maschine bzw. das Modul zu integrieren ist.

Die erfindungsgemäße Schnittstelle zeichnet sich entsprechend bevorzugt dadurch aus, dass eine Plugin-Bibliothek mit mehreren Plugins vorgesehen ist, wobei für zwei oder mehr der Plugins der Bibliothek gilt, dass sie einerseits für die gleiche zu integrierende Maschine bzw. das gleiche zu integrierende Modul und andererseits jeweils für ein anders ausgebildet und/oder eingerichtetes Orchestrierungs-System spezifisch sind, und jedes dieser Plugins der Bibliothek dazu ausgebildet ist, gegebenenfalls im Anschluss an eine Parametrierung und/oder Konfigurierung durch einen Benutzer, eine Anpassung zwischen einer einer Maschine oder einem Modul zugeordneten Maschinen-Schnittstelle und einer einem Orchestrierungs-System zugeordneten System-Schnittstelle zu realisieren.

Die zu integrierende Maschine bzw. das zu integrierende Modul umfasst insbesondere Fähigkeiten, die von Fähigkeiten abweichen, die gemäß der Ausgestaltung und/oder Einrichtung des Orchestrierungs-Systems, insbesondere gemäß einem von dem Orchestrierungs-System genutzten Standard, insbesondere Integrationsstandard vorgesehen sind.

Im Falle einer Plugin-Bibliothek ist zweckmäßiger Weise jedes der Plugins dazu ausgebildet, um wenigstens einen für die (jeweilige, zum jeweiligen Plugin gehörige) Maschine bzw. das (jeweilige, zum jeweiligen Plugin gehörige) Modul spezifischen Zustand wenigstens einem für das jeweilige (zum jeweiligen Plugin gehörige) Orchestrierungs-System spezifischen Zustand zuzuordnen, und/oder um für die Maschine bzw. das Modul spezifische Kommunikationsparadigmen auf für das jeweilige (zum jeweiligen Plugin gehörige) Orchestrierungs-System spezifische Kommunikationsparadigmen abzubilden, und/oder um eine Funktionsschnittstelle, die Funktionsaufrufe des jeweiligen (zum jeweiligen Plugin gehörigen) Orchestrierungs-Systems in Funktionsaufrufe für die (jeweilige) Maschine bzw. das (jeweilige) Modul übersetzt und/oder die Funktionsaufrufe der (jeweiligen) Maschine bzw. des (jeweiligen) Moduls in Funktionsaufrufe für das jeweilige (zum jeweiligen Plugin gehörige) Orchestrierungs-System übersetzt, zu implementieren.

Das bzw. - im Falle einer Plugin-Bibliothek - jedes Plugin ist einerseits für die oder die jeweilige Maschine bzw. das oder das jeweilige Modul und andererseits für das bzw. das jeweilige Orchestrierungs-System, bevorzugt für einen von dem oder dem jeweiligen Orchestrierungs-System bzw. einer Schnittstelle dieses genutzten bzw. unterstützten Standard, bevorzugt Integrationsstandard, spezifisch.

Die Plugin-Bibliothek kann neben beispielsweise zwei oder mehr Plugins, die für eine Art von Maschine/Modul spezifisch sind, natürlich auch noch Plugins umfassen, die für eine oder mehrere andere Arten von Maschine/Modul spezifisch sind. Die Plugin-Bibliothek kann also auch Plugins für verschiede Maschinen/Module bzw. Arten dieser aufweisen. Dann kann die Bibliothek besonders viele verschiedene Anwendungsfälle abdecken. Es kann sein, dass für eine Maschine/ein Modul bzw. zusammen mit einer Maschine/einem Modul eine Bibliothek bereitgestellt wird, welche nur Plugins für diese Maschine/dieses Modul umfasst oder auch eine umfassendere Bibliothek, welche auch noch andere, also mehrere Maschinen und/oder Module abdeckt.

Die erfindungsgemäße Schnittstelle kann mit anderen Worten auch als Integrationsschnittstelle bezeichnet werden, die eine Integration, insbesondere Laufzeit-Integration von Maschinen bzw. Modulen mit spezifischen Fähigkeiten in bzw. eine Anbindung solcher an ein überlagertes Orchestrierungs-System, dass insbesondere eine standardisierte Laufzeit-Schnittstelle für die Laufzeit-Integration nutzt, ermöglicht. Mit dem bzw. in dem erfindungsgemäße vorgesehenen bzw. verwendeten Plugin (im Falle einer Plugin-Bibliothek mit dem bzw. in dem jeweiligen Plugin) kann eine Adaption einer System-Schnittstelle des überlagerten Orchestrierungs-Systems, in das eine Laufzeit-Einbindung bzw. -Integration gewünscht bzw. erforderlich ist, an eine insbesondere proprietäre Maschinen-Schnittstelle der Maschine bzw. des Moduls erfolgen. Das Plugin bzw. das jeweilige Plugin erweitert insbesondere die Funktion des Orchestrierungs-Systems um die Kommunikationsfähigkeit mit einer spezifischen Maschine/mit einem spezifischen Modul. In dem (jeweiligen) Plugin kann insbesondere die Adaption der proprietären Maschinen-/Modulzustände und/oder Datenstrukturen an das Zustandsmodell bzw. die Datenstrukturen des (jeweiligen) Orchestrierungs-Systems erfolgen.

Beispielsweise kann im Kontext der Abbildung des Status einer Ressource eine Lösung zur Statusabfrage oder Ansteuerung von Produktionszuständen umgesetzt werden. Es kann ein Mapping zwischen ggf. unterschiedlichen Zuständen/States auf Seite des Orchestrierungs-Systems, etwa eines MES, und der Maschinen- bzw. Modulseite erfolgen. Auch können ggf. unterschiedliche Kommunikationsparadigmen aufeinander abgebildet werden (z.B. eine zyklische Kommunikation auf Seiten der Maschine/des Moduls und eine Event-basiert Kommunikation auf Seiten des Orchestrierungs-Systems oder umgekehrt). Für einzelne Aufgaben kann es vorimplementierte "Bausteine" geben die anhand der Aufgabestellung (abgeleitet aus Interfacebeschreibungen) genutzt werden, um das Engineering für Plugins zu vereinfachen. Gegebenenfalls notwendige anwendungsspezifische Parameter können etwa von einem Nutzer strukturiert erfragt bzw. eingegeben werden. Dies können z.B. Parameter sein, die zur Konfiguration von maschinenspezifischen Leistungen gehören, die über den Standard hinausgehen.

Es ist möglich, dass einem Nutzer für ein Zustands/State-Mapping eine Eingabemaske zur Abbildung der States aufeinander vorgegeben wird oder eine Abfrage zur Samplingrate bei Überführung einer Event-basierten in eine zyklische Kommunikation. Mit Hilfe vordefinierter parametrierbarer Elemente durch den Ersteller der Plugins muss die Schnittstelle nicht für jede neue Lösung neu ausprogrammiert werden. Stattdessen muss nur das den gewünschten Standard bedienende Plugin ausgewählt und durch den Anwender konfiguriert werden. Einmal erstellte Plugins können in einer Library verwaltet und damit der Wiederverwendung zugänglich gemacht werden, falls ähnliche Aufgabenstellungen mehrfach zu lösen sind.

Das erfindungsgemäße Verfahren und die erfindungsgemäße Schnittstelle ermöglichen eine besonders einfache und komfortable Integration/Einbindung von Automatisierungs-, insbesondere Produktionsaufgaben übernehmenden Maschinen/Modulen, die sich durch spezifische Fähigkeiten auszeichnen und/oder verschiedenste Kommunikationsprotokolle - mit jeweils zugrundeliegendem spezifischen Verhalten - nutzen, in ein Orchestrierungs-System. Dabei ist kein bzw. kein umfangreiches Tätigwerden von Benutzerseite erforderlich und auch die Maschine bzw. das Modul selber muss nicht entsprechend ausgestaltet werden.

Die Bereitstellung bzw. Verwendung einer Bibliothek mit mehr als einem Plugin für eine zu integrierende Maschine bzw. ein zu integrierendes Modul, ggf. auch für mehrere solche, bietet den großen Vorteil, dass flexibel eine Anpassung auch an mehrere unterschiedliche Orchestrierungs-Systeme bzw. an mehrere unterschiedliche, von solchen nutzbare/genutzte Standards möglich ist, dies ggf. auch für mehrere verschiedene Maschinen und/oder Module.

Für eine gegeben Maschine bzw. ein gegebenes Modul, die bzw. das in ein gegebenes Orchestrierungs-System zu integrieren ist wird dann aus der Bibliothek dasjenige Plugin ausgewählt, welches für die Maschine/das Modul und das Orchestrierungs-System bzw. eine Ausgestaltung und/oder Einrichtung dieses spezifisch, also diesen zugeordnet ist.

Das oder - im Falle der Plugin-Bibliothek - jedes Plugin umfasst in bevorzugter Ausgestaltung Informationen über Fähigkeiten der (jeweiligen) zu integrierenden Maschine oder des (jeweiligen) zu integrierenden Moduls, die von Fähigkeiten abweichen, die gemäß der Ausgestaltung und/oder Einrichtung des oder des (jeweiligen) Orchestrierungs-Systems, insbesondere gemäß einem von dem oder dem jeweiligen Orchestrierungs-System genutzten/unterstützten Standard, insbesondere Standard für die Laufzeit-Integration von Maschinen/Modulen, vorgesehen sind.

Unter einer Schnittstelle ist bevorzugt ein Software- und/oder Hardware-technisches Konstrukt zu verstehen, welches bevorzugt über einen vordefinierten Mechanismus den Austausch von Informationen zwischen wenigstes zwei Kommunikationspartner ermöglicht. Kommunikationspartner können beispielsweise durch Komponenten, Objekte, Module, Anwendungen bzw. Programmen gegeben sein. Eine Schnittstelle kann Software oder Hardware oder eine Kombination aus Software und Hardware umfassen bzw. durch Software oder Hardware oder durch eine Kombination aus Software und Hardware gebildet sein.

Unter einem Plugin (auch Plug-in geschrieben) ist eine Software bzw. Software-Komponente zu verstehen. Bevorzugt ist das Plugin bzw. - im Falle der Plugin-Bibliothek - sind die Plugins derart ausgestaltet, dass sie in verschiedenen Ausführungsumgebunden ausgeführt werden können.

Bei dem Plugin bzw. den Plugins handelt es sich bevorzugt (jeweils) um eine insbesondere ausprogrammierte Software-Komponente, mit anderen Worten um ein "Stück" insbesondere ausprogrammierte Software. Man kann auch von einem Software-Modul sprechen. Das bzw. das jeweilige Plugin ist insbesondere eine Software(komponente) mit einer erweiternden Rolle, also eine Software(komponente), die wenigstens eine andere Software(komponente) erweitert, insbesondere wenigstens eine Software(komponente) des Orchestrierungs-Systems, um dessen Funktion um die Kommunikationsfähigkeit mit einer spezifischen Maschine/mit einem spezifischen Modul zu erweitern.

Es kann sich (jeweils) um eine gekapselte Software(-Komponente) handeln. Das (jeweilige) Plugin kann beispielsweise wenigstens einen Container umfassen bzw. durch einen solchen gegeben sein. Die Container-Technologie ist aus dem Bereich der allgemeinen IT bekannt. Als Beispiele für Container-Technologien seien "Docker" oder "rkt" (gesprochen "rocket") oder "Kubernetes" genannt (siehe https://www.docker.com bzw. EP 3 267 351 A1, https://coreos.com/rkt/, https://kubernetes.io/). (Anwendungs-)Container stellen in der Regel "abgekapselte" Einheiten dar, die unabhängig voneinander ausgeführt werden können, egal wo sie sich befinden. Container sind insbesondere eine Art Behälter für Anwendungen, in denen diese laufen können. Die Container-Technologien bzw. Containerisierung ermöglichen es insbesondere, eine Software bzw. Anwendung in einem Container zu verpacken, der alles umfasst, was sie zum Laufen braucht, beispielsweise Programmcode, Laufzeit, System-Tools und/oder Systembibliotheken. Die Container-Technologien bzw. Containerisierung erlauben es, Funktionen einfach und bequem modular zu verpacken, zu transportieren und schließlich in den operativen Bereich auszurollen. Ein Container kann insbesondere von einem Container Image, im Falle von Docker beispielswiese einem Docker Image, erzeugt (instanziert) werden, welches als Daten-Template dient.

Vor der in Schritt b) erfolgenden Ausführung des Plugins kann eine Parametrierung und/oder Konfigurierung des Plugins durch einen Benutzer erfolgen, bevorzugt, indem ein Benutzer in einer Eingabemaske wenigstens einen Parameter eingibt und/oder aus einer angebotenen Auswahl auswählt. Es kann beispielsweise eine Samplingrate insbesondere von einem Benutzer ein- bzw. angegeben werden, wenn eine Abbildung von einer Ereignis-basierten auf eine zyklische Kommunikation vorgesehen ist. Die Samplingrate kann in einer Eingabemaske eingegeben werden.

Eine weitere vorteilhafte Ausführungsform zeichnet sich dadurch aus, dass in Schritt b) das Plugin eine Anpassung zwischen einer zur Laufzeit genutzten System-Schnittstelle des Orchestrierungs-Systems und einer zur Laufzeit genutzten insbesondere proprietären Maschinen-Schnittstelle der Maschine bzw. des Moduls realisiert.

Die erfindungsgemäße Schnittstelle kann sich dadurch auszeichnen, dass das oder jedes Plugin dazu ausgebildet ist, gegebenenfalls im Anschluss an eine Parametrierung und/oder Konfigurierung durch einen Benutzer, eine Anpassung einer zur Laufzeit genutzten insbesondere standardisierten System-Schnittstelle des oder des jeweiligen Orchestrierungs-Systems an eine zur Laufzeit genutzte insbesondere proprietäre Maschinen-Schnittstelle der zu integrierenden Maschine bzw. des zu integrierenden Moduls zu realisieren.

Es kann vorgesehen sein, dass in Schritt b) das Plugin eine Anpassung zwischen einer standardisierten Schnittstelle des Orchestrierungs-Systems, insbesondere einer gemäß einer OPC UA Companion Spezifikation oder einem der Standards VDI 2860 oder ISA S95 oder DIN8596-3 oder VDI/VDE/NAMUR 2658 oder OMAC oder Weihenstephan standardisierte System-Schnittstelle und einer insbesondere proprietären Maschinen-Schnittstelle realisiert. Das bzw. jedes Plugin der erfindungsgemäßen Schnittstelle kann entsprechend ausgebildet sein.

Die erfindungsgemäße Schnittstelle kann sich entsprechend dadurch auszeichnen, dass eine System-Schnittstelle eines Orchestrierungs-Systems vorgesehen ist, die bevorzugt eine standardisierte Laufzeit-Schnittstelle, insbesondere gemäß einer OPC UA Companion Spezifikation oder einem der Standards VDI 2860 oder ISA S95 oder DIN8596-3 oder VDI/VDE/NAMUR 2658 oder OMAC oder Weihenstephan ist. Ist eine System-Schnittstelle eines Orchestrierungs-Systems Bestandteil der erfindungsgemäßen Schnittstelle, gehört diese zu einem solchen System bzw. ist in einem solchen System implementiert.

Es kann auch eine Anpassung zwischen einer gemäß einem Herstellerstandard standardisierten System-Schnittstelle und einer Maschinen-Schnittstelle realisiert werden.

In Schritt b) wird das Plugin bevorzugt im Ablaufkontext des Orchestrierungs-Systems ausgeführt.

Dass das bzw. das jeweilige Plugin dazu ausgebildet ist, eine Anpassung zwischen einer der Maschine oder dem Modul zugeordneten Maschinen-Schnittstelle und einer dem Orchestrierungs-System zugeordnete System-Schnittstelle zu realisieren schließt bevorzugt mit ein bzw. bedeutet bevorzugt, dass über das Plugin insbesondere standardisierte Schnittstellen-Strukturen des (jeweiligen) Orchestrierungs-Systems auf insbesondere proprietäre Schnittstellen-Strukturen der zu integrierenden Maschine bzw. des zu integrierenden Moduls abgebildet werden können bzw. abgebildet werden.

Das bzw. das jeweilige Plugin umfasst bevorzugt einen Basistreiber. Der Basistreiber kann ein Treiber für standardisierte Schnittstellen-Strukturen, bevorzugt für auf einer OPC UA Companion Spezifikation oder auf einem der Standards VDI 2860 oder ISA S95 oder DIN8596-3 oder VDI/VDE/NAMUR 2658 oder OMAC oder Weihenstephan basierende standardisierte Schnittstellen-Strukturen sein. Der Basistreiber implementiert bevorzugt wiederverwendbare Kommunikationsmethoden, die sich zum Beispiel auf Basis der Festlegung in einer Companion-Spec ergeben.

Basieren standardisierte Interface-Strukturen beispielsweise auf einer OPC UA Companion Specification kann es ausreichen, dass das Orchestrierungssystem nur wenige, durch OPC UA Companion Specifications festgelegte
Schnittstellen implementiert. Beispielsweise werden in OPC UA Companion Specifications Zustandsautomaten definiert, die den aktuellen Zustand einer Maschine oder eines Moduls repräsentieren und klar definieren, welcher der Kommunikationspartner Zustandsübergänge auslösen darf. Damit kann die Interaktion des Orchestrierungs-System generisch umgesetzt werden für die Interaktion mit alle Maschinen oder Modulen, die die jeweilige Spezifikation unterstützen.

Im Plugin, welches zum Beispiel vom Maschinenbauer mit der Maschine/dem Modul ausgeliefert wird, kann dann eine Adaption des Standard-Interfaces gemäß Companion Specification an das proprietäre Interface der Maschine/des Moduls erfolgen. Das Plugin ist bevorzugt ein Stück ausprogrammierte Software, in welcher die Adaption der proprietären Maschinen-/Modulzustände und Datenstrukturen an das durch die jeweilige OPC UA Companion Specification
spezifizierte Zustandsmodell und die standardisierten Datenstrukturen erfolgt.

Ein Orchestrierungs-System ist insbesondere ein Steuer- und/oder Management-System bevorzugt einer industriellen Automatisierungsanlage. Als Beispiele für Orchestrierungs-Systeme seien Manufacturing-Execution-Systeme, kurz MES, Supervisory-Control-And-Data-Acquisition-Systeme, kurz SCADA-System oder auch Batch-Systeme genannt. Ein Batch-System dient bevorzugt der Rezeptsteuerung für den Chargenbetrieb bei verfahrenstechnischen Prozessen.

Dass eine Maschine bzw. ein Modul in ein überlagertes Orchestrierungs-System integriert ist bedeutet insbesondere, dass die Maschine/das Modul an das System angebunden ist, bevorzugt, dass zur Laufzeit eine Kommunikation zwischen Orchestrierungs-System und Maschine/Modul erfolgen kann, beispielsweise zwischen dem Orchestrierungs-System und der Maschine/dem Modul zur Laufzeit (insbesondere einer Automatisierungsanlage, welcher das System zugeordnet ist) Zustandsabfragen und/oder Funktionsaufrufe erfolgen können.

Bei der zu integrierenden Maschine bzw. dem zu integrierenden Modul handelt es sich bevorzugt um eine intelligente Maschine bzw. ein intelligentes Modul, welche bzw. welches dazu ausgebildet und/oder eingerichtet ist, in einem vorgegebenen Entscheidungsrahmen autonom Entscheidungen, welche wenigstens eine von der Maschine bzw. dem Modul auszuführende Automatisierungsaufgabe betreffen, treffen zu können.

Bildet im Rahmen des erfindungsgemäßen Verfahrens in Schritt b) das Plugin für die Maschine bzw. das Modul spezifische Kommunikationsparadigmen auf für die Ausgestaltung und/oder Einrichtung des Orchestrierungs-Systems spezifische Kommunikationsparadigmen ab, schließt dies bevorzugt die Abbildung von einer Ereignis-basierten auf eine zyklische Kommunikation ein.

Ist das Plugin bzw. - im Falle einer Plugin-Bibliothek - jedes Plugin der erfindungsgemäßen Schnittstelle dazu ausgebildet, gegebenenfalls im Anschluss an eine Parametrierung und/oder Konfigurierung durch einen Benutzer, für eine zu integrierende Maschine bzw. ein zu integrierendes Modul spezifische Kommunikationsparadigmen auf für die Ausgestaltung und/oder Einrichtung des oder des jeweiligen Orchestrierungs-Systems spezifische Kommunikationsparadigmen abzubilden, schließt dies bevorzugt die Abbildung von einer Ereignis-basierten auf eine zyklische Kommunikation ein.

Es ist möglich, dass in Schritt b) von dem Plugin Prüfungen von Prekonditionen, die bevorzugt erfüllt sein müssen, damit eine Funktion einer zu integrierenden Maschine bzw. eines zu integrierenden Moduls gestartet werden kann, absolviert werden, und/oder in Schritt b) von dem Plugin Prüfungen von Postkonditionen, die bevorzugt erfüllt sein müssen, damit eine Funktion einer zu integrierenden Maschine bzw. eines zu integrierenden Moduls erfolgreich beendet werden kann, absolviert werden.

Was die erfindungsgemäße Schnittstelle angeht, kann entsprechend vorgesehen sein, dass das oder jedes Plugin Prüfungen von Prekonditionen, die bevorzugt erfüllt sein müssen, damit eine Funktion einer zu integrierenden Maschine bzw. eines zu integrierenden Moduls gestartet werden kann, implementieren, und/oder das oder jedes Plugin Prüfungen von Postkonditionen, die bevorzugt erfüllt sein müssen, damit eine Funktion einer zu integrierenden Maschine bzw. eines zu integrierenden Moduls erfolgreich beendet werden kann, implementieren.

Die erfindungsgemäße Schnittstelle kann sich ferner dadurch auszeichnen, dass wenigstens ein Indikator-Element vorgesehen ist, über welches eine Maschine bzw. ein Modul einem Orchestrierungs-System mitteilen kann, ob Pre- und/oder Postkonditionen einer Fähigkeit der Maschine bzw. des Moduls erfüllt sind. Das Indikator-Element kann ein rein funktionales, insbesondere Software-implementiertes Element und/oder Teil eines bzw. jedes Plugins sein.

Prekonditionen (englisch: Preconditions) müssen in der Regel erfüllt sein, bevor eine Fähigkeit ausgeführt werden kann. Postkonditionen (englisch: Postconditions) werden in der Regel von einer Fähigkeit sichergestellt, nachdem sie erfolgreich durchgeführt wurde.

Eine weitere bevorzugte Ausführungsform zeichnet sich dadurch aus, dass das bzw. das jeweilige Plugin eine semantische Beschreibung umfasst bzw. durch eine semantische Beschreibung angereichert ist. Über eine semantische Beschreibung wird es besonders einfach, ein geeignetes, insbesondere zu einem gegebenen Orchestrierungs-System und/oder zu einer gegebenen anzubindenden Maschine bzw. einem Modul passendes Plugin zu finden.

Die (jeweilige) semantische Beschreibung ist bevorzugt eine Menge von Metadaten und/oder von festgelegten Begrifflichkeiten. Über die bzw. in der (jeweiligen) semantischen Beschreibung kann insbesondere angegeben werden, für welche Art von Maschine das Plugin vorgesehen ist, beispielsweise für eine Drehmaschine, und/oder für welchen Standard.

Ein weiterer Gegenstand der Erfindung ist ein Orchestrierungs-System für eine industrielle Automatisierungsanlage umfassend wenigstens eine erfindungsgemäße Schnittstelle. Es handelt sich bevorzugt um eine Orchestrierungs-System, welches eine Automatisierungsaufgabe ausführt. Als Beispiele für erfindungsgemäße Orchestrierungs-Systeme seien Manufacturing-Execution-Systeme, kurz MES, Supervisory-Control-And-Data-Acquisition-Systeme, kurz SCADA-System oder auch Batch-Systeme genannt

Die Erfindung betrifft auch eine Maschine oder Modul zum Ausführen wenigstens einer industrielle Automatisierungsaufgabe umfassend wenigstens eine erfindungsgemäße Schnittstelle.

Darüber hinaus ist Gegenstand der Erfindung eine industrielle Automatisierungsanlage umfassend ein Orchestrierungs-System und wenigstens eine Maschine und/oder wenigstens ein Modul, die bzw. das über eine erfindungsgemäße Schnittstelle in das Orchestrierungs-System integriert ist.

Ein weiterer Gegenstand der Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
FIG 1 ein Orchestrierungs-System, in welchem eine erfindungsgemäße Schnittstelle zur Integration implementiert ist, über die eine Maschine zur Laufzeit in das Orchestrierungs-System integriert ist; und
Figur 2 die allgemeine Zustandsmaschine des Orchestrierungs-Systems und die komplexe Zustandsmaschine der Maschine aus Figur 1, die über ein Plugin der erfindungsgemäßen Schnittstelle aufeinander abgebildet sind.

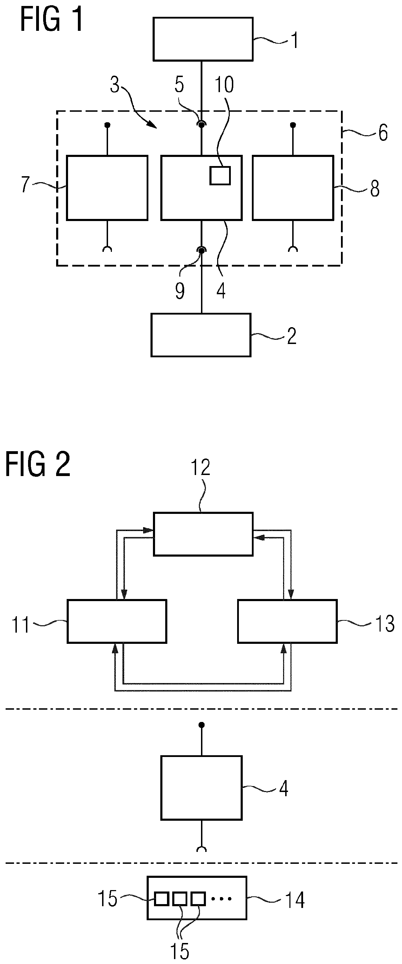

Die Figur 1 zeigt in rein schematischer Blockbilddarstellung ein Orchestrierungs-System 1 einer industriellen Automatisierungsanlage, bei dem es sich vorliegend um ein Manufacturing-Execution-System, kurz MES handelt, sowie eine intelligente, mit spezifischen, proprietären Fähigkeiten ausgestattet Maschine 2 der Anlage. Dass es sich bei dem Orchestrierungssystem 1 um ein MES handelt ist rein beispielhaft zu verstehen. Es könnte alternativ dazu beispielsweise auch als SCADA- oder Batch-System ausgestaltet sein.

Die Maschine 2 ist über ein Ausführungsbeispiel einer erfindungsgemäßen Schnittstelle zur Integration 3, die auch als Integrationsschnittstelle 3 bezeichnet werden kann, in das MES 1 zur Laufzeit integriert.

Die Maschine 2 ist bei dem Beispiel durch eine Steuerung, konkret eine speicherprogrammierbare Steuerung gegeben, die in hinlänglich vorbekannter Weise über ein Kommunikationsnetzwerk der Automatisierungsanlage mit Feldgeräte darstellenden Sensoren und Aktoren verbunden ist und zyklisch Messdaten von Sensoren empfängt, unter Berücksichtigung dieser Stellwerte für die Aktoren ermittelt, die ebenfalls zyklisch an diese übermittelt werden. Die industrielle Automatisierungsanlage kann neben dem MES 1, der Steuerung 2 und den dieser zugeordneten Sensoren und Aktoren in ebenfalls hinlänglich bekannter Weise eine Vielzahl weiterer Komponenten umfassen, die beispielsweise in einer Halle angeordnet sein können. Bei dem dargestellten Ausführungsbeispiel dient die industrielle Automatisierungsanlage der automatisierten Herstellung nicht gezeigter Produkte.

Zu der Steuerung 2 alternative Beispiele für in Orchestrierungs-Systeme industrieller Automatisierungsanlagen zur Laufzeit zu integrierende Maschinen seinen Werkzeug- oder Produktions-Maschinen genannt.

Die Schnittstelle 3 umfasst bei dem dargestellten Ausführungsbeispiel ein Plugin 4 und eine System-Schnittstelle 5 des MES 1, die eine standardisierte Laufzeit-Schnittstelle gemäß einer OPC UA Companion Spezifikation ist.

Das Plugin 4 ist aus einer Plugin-Bibliothek 6 ausgewählt worden, welche neben dem Plugin 4 noch zwei weitere Plugins 7, 8 umfasst.

Jedes der drei Plugins 4, 7, 8 der Bibliothek 6 ist einerseits für die zu integrierende Maschine 2 und andererseits jeweils für ein anders ausgebildet und/oder eingerichtetes Orchestrierungs-System spezifisch. Bei dem dargestellten Ausführungsbeispiel ist jedes der drei Plugins 4, 7, 8 konkret für einen anderen von Orchestrierungs-Systemen bzw. einer Laufzeit-Schnittstelle von Orchestrierungs-Systemen nutzbaren bzw. unterstützbaren Standard, konkret Integrationsstandard spezifisch. Jedes der drei Plugins 4, 7, 8 ist vorliegend für einen anderen OPC UA Companion Standard bzw. eine andere OPC UA Companion Spezifikation spezifisch. Dies ist beispielhaft zu verstehen. Alternativ könnten von den drei Plugins 4, 7, 8 beispielsweise auch eines für eine OPC UA Companion Standard , eines für einen Hersteller-Standard von einem ersten Hersteller und eines für einen Hersteller-Standard eines zweiten Herstellers spezifisch sein.

Es sei angemerkt, dass die Anzahl von drei Plugins 4, 7, 8 rein beispielhaft zu verstehen ist und eine Bibliothek 6 natürlich auch nur zwei oder auch mehr als drei Plugins 4, 7, 8 umfassen kann. Dabei können nicht nur mehrere Plugins 4, 7, 8 für die gleiche Maschine/das gleiche Modul vorgesehen sein, sondern es ist natürlich auch möglich, dass eine Bibliothek Plugins für mehr als eine Maschinen/mehr als ein Modul umfasst.

Jedes Plugin 4, 7, 8 der Bibliothek 6 ist dazu ausgebildet, gegebenenfalls im Anschluss an eine Parametrierung und/oder Konfigurierung durch einen Benutzer, eine Anpassung zwischen einer dem jeweiligen Orchestrierungs-System zugeordneten, zur Laufzeit zu nutzenden bzw. genutzten System-Schnittstelle und einer der Maschine 2 zugeordneten, zur Laufzeit zu nutzenden bzw. genutzten proprietären Maschinen-Schnittstelle 9 zu realisieren.

Jedes Plugin 4, 7, 8 ist dabei dazu ausgebildet, um die für die Maschine 2 spezifischen Zustände Zuständen zuzuordnen, die für das auf jeweilige Art ausgebildete und/oder eingerichtete Orchestrierungs-System, konkret für die verschiedenen genannten Standards spezifisch sind, und/oder um für die Maschine 2 spezifische Kommunikationsparadigmen auf für den jeweiligen Standard spezifische Kommunikationsparadigmen abzubilden, und/oder um eine Funktionsschnittstelle, die Funktionsaufrufe des bzw. gemäß dem jeweiligen Standard in Funktionsaufrufe für die Maschine 2 zu übersetzt und/oder Funktionsaufrufe der Maschine 2 in Funktionsaufrufe des bzw. gemäß dem jeweilige Standard übersetzt, zu implementieren. Die Abbildung der Kommunikationsparadigmen schließt bei dem dargestellten Ausführungsbeispiel die Abbildung von einer Ereignis-basierten auf eine zyklische Kommunikation einschließt.

Jedes der Plugins 4, 7,8 umfasst Informationen über Fähigkeiten der zu integrierenden Maschine 2, die von Fähigkeiten abweichen, die gemäß der Ausgestaltung und/oder Einrichtung des jeweiligen Orchestrierungs-Systems, konkret gemäß dem von dem jeweiligen Orchestrierungs-System genutzten Standard vorgesehen sind.

Jedes der Plugins 4, 7, 8 implementiert ferner Prüfungen von Prekonditionen, die erfüllt sein müssen, damit eine Funktion der zu integrierenden Maschine gestartet werden kann, sowie Prüfungen von Postkonditionen, die erfüllt sein müssen, damit eine Funktion der zu integrierenden Maschine 2 erfolgreich beendet werden kann. Hierzu umfasst bzw. implementiert jedes der Plugins 4, 7, 8 ein Indikatorelement.

Jedes Plugin 4, 7, 8 umfasst einen Basistreiber. Der Basistreiber implementiert bevorzugt wiederverwendbare Kommunikationsmethoden, die sich zum Beispiel auf Basis der Festlegung in einer Companion-Spec ergeben.

Unter Verwendung der in Figur 1 dargestellten Komponenten kann ein Ausführungsbeispiel des erfindungsgemäßen Verfahrens durchgeführt werden.

Dazu wird die gezeigte Plugin-Bibliothek 6 bereitgestellt und dasjenige Plugin 4 ausgewählt, welches zu dem gezeigten Orchestrierungs-System 1 gehört, konkret zu dem von diesem bzw. dessen System-Schnittstelle genutzten/implementierten Laufzeit-Integrationsstandard gehört. Die Auswahl wird vorliegend von dem Maschinenbauer, also dem Hersteller der Maschine 2 getroffen. Bei dem hier beschriebenen Ausführungsbeispiel umfassen die Plugins 4, 7, 8 für eine besonders einfache Auswahl eine semantische Beschreibung. Die jeweilige semantische Beschreibung ist bevorzugt eine Menge von Metadaten und/oder von festgelegten Begrifflichkeiten. Über die bzw. in der jeweiligen semantischen Beschreibung ist insbesondere angegeben, für welchen Standard das Plugin vorgesehen ist.

Es erfolgt eine Parametrierung und/oder Konfigurierung des Plugins 4 durch einen Benutzer der Anlage. Konkret werden einige anwendungsspezifische Parameter 10 von dem Benutzer in einer Eingabemaske eingegeben bzw. ausgewählt. Die Eingabemaske wird dabei auf demselben Ausgabegerät gezeigt, wie die Oberfläche des Orchestrierungs-Systems 1.

Dieses parametrierte Plugin 4 wird dann im Ablaufkontext des MES 1 ausgeführt.

Von dem Plugin 4 werden für die Maschine 2 spezifische Zustände Zuständen zugeordnet, die für den von dem MES 1 genutzten Standard spezifisch sind. Mit anderen Worten erfolgt ein Zustandsmapping zwischen den standardisierten Zuständen des MES 1 und den spezifischen Zuständen auf Seiten der Maschine 2. Dies ist - wiederum rein beispielhaft und schematisch - in Figur 2 dargestellt, die praktisch die Abbildung des Status einer Ressource betrifft. Es sei angemerkt, dass in Figur 2 die Ebene des MES 1, das Plugin 4 und die Ebene der Maschine 2 (in dieser Reihenfolge von oben nach unten) schematisch durch zwei strichpunktierte Linien separiert dargestellt sind.

Um hier eine Lösung zur Statusabfrage oder Ansteuerung von Produktionszuständen umzusetzen, müssen im Wesentlichen ein Mapping zwischen den ggf. unterschiedlichen States auf MES- bzw. Maschinenseite erfolgen und die ggf. unterschiedlichen Kommunikationsparadigmen aufeinander abgebildet werden (z.B. zyklisch vs. Event-basiert).

Bei dem hier beschriebenen Ausführungsbeispiel sind gemäß dem MES 1 bzw. gemäß dem verwendeten Standard (allgemeine "Zustandsmaschine") konkret nur drei Zustände, nämlich "laufend (englisch: runnig)" 11, "untätig/bereit (englisch: idle/ready)" 12 sowie "Fehler/nicht bereit (englich: error/not ready)" 13 vorgesehen bzw. möglich, wobei dies rein beispielhaft zu verstehen ist. Die Maschine 2 zeichnet sich hingegen durch eine komplexe Zustandsmaschine 14 aus, in welcher bei dem gezeigten Beispiel insgesamt 16 mögliche Zustände 15 vorgesehen sind, die jeweils durch einen Integer-Wert angegeben sind.

Das Plugin 4 implementiert ein Mapping der Zustände 11, 12, 13 gemäß dem MES 1 auf die Zustände 15 auf Maschinenseite. Das Plugin 4 konvertiert die für die Maschine 2 spezifischen Zustände 15 in die für die Ausgestaltung und/oder Einrichtung des MES1 spezifischen Zustände 11, 12, 13 und/ umgekehrt. Dazu wird im Plugin 4 ein Verfahren zur Abbildung der Zustände implementiert. Dies kann z.B. eine einfache Zuordnung (Zustand 1 = Zustand A), eine Aggregation (Zustand 1 oder 2 = Zustand A) oder eine Disaggregation/Alternativen (Zustand 1 = Zustand A wenn Bedingung X erfüllt, sonst Zustand B) umfassen.

Welche Zustände 15 der Maschine 2 zu welchen Zuständen 11, 12, 13 des MES 1 gehören, kann vorab kann durch den Benutzer in der Eingabemaske ausgewählt worden sein. Eine Zuordnung kann alternativ auch durch das Plugin 4 selbst erfolgen bzw. erfolgt sein 4.

Für einzelne Aufgaben kann es vorimplementierte "Bausteine" geben, die anhand der Aufgabestellung (abgeleitet aus Interfacebeschreibungen) genutzt werden, um das Engineering für Plugins zu vereinfachen. Gegebenenfalls notwendige anwendungsspezifische Parameter können etwa von einem Nutzer strukturiert erfragt bzw. eingegeben werden. Rein beispielhaft sei die Umsetzung einer zyklischen Kommunikation auf eine Event-basierte Kommunikation bzw. der entsprechende Rückweg genannt. Ein entsprechender Mechanismus könnte bereits vorimplementiert sein. Bei Anwendung des Bausteines können die notwendigen Parameter für diese spezielle Lösung wie z.B. die Samplingrate angegeben werden.

Das Plugin 4 konvertiert bei dem gezeigten Beispiel ferner wenigstens eine für die Maschine 2 spezifische Datenstruktur in wenigstens eine für die Ausgestaltung und/oder Einrichtung des MES 1 spezifische Datenstruktur und umgekehrt. Rein beispielhaft hierfür sei genannt, dass Fehlernachrichten von der Maschine mit einem entsprechenden numerischen Fehlercode angegeben werden, und für das Orchestrierungs-System 1 die Fehlercodes (auf Basis einer Mappingtabelle) in eine lesbare Textnachricht konvertiert werden.

Das Plugin 4 bildet auch die für die Maschine 2 spezifische Kommunikationsparadigmen auf die für die Ausgestaltung und/oder Einrichtung des MES 1 spezifischen Kommunikationsparadigmen ab, nämlich die zyklische Kommunikation auf Seiten der Maschine 2 auf die Ereignis-basierte des MES 1. Eine benutzerseitige Abfrage zur Samplingrate kann ebenfalls über die Eingabemaske erfolgt sein. Eine Samplingrate kann aber auch von dem Plugin 4 selber gewählt werden.

Schließlich implementiert das Plugin 4 eine Funktionsschnittstelle, die Funktionsaufrufe des MES 1 in Funktionsaufrufe für die Maschine 2 übersetzt. Die umgekehrte Richtung kann - bei Bedarf - auch realisiert werden.
Von dem Plugin 4 werden ferner Prüfungen von Prekonditionen, die erfüllt sein müssen, damit eine Funktion der Maschine 2 gestartet werden kann, sowie Prüfungen von Postkonditionen, die erfüllt sein müssen, damit eine Funktion der Maschine 2 erfolgreich beendet werden kann, absolviert.

Im Ergebnis wird trotz der Abweichungen auf einfache, für den Benutzer sehr komfortable Weise eine Integration der Maschine 2 mit der propriertären Maschinen-Schnittstelle 9 zur Laufzeit in das MES 1 möglich.

Maschinen können mit proprietären Maschinen-Schnittstellen versehen und über das erfindungsgemäß Verwendete Plugin 4 beispielsweise an verschiedene OPC UA Companion Standards angepasst werden, ohne dass eine Anpassung der Maschine 2 selber - ggf. an mehrere mögliche Standards - nötig ist, was mit nicht unerheblichem Aufwand verbunden wäre.

Es sei angemerkt, dass das dargestellte, die Schnittstelle 3 umfassende MES 1 ist ein Ausführungsbeispiel eines erfindungsgemäßen Orchestrierungs-Systems.

Die das MES 1 und die Maschine 2 umfassende industrielle Automatisierungsanlage ist ein Ausführungsbeispiel einer erfindungsgemäßen industriellen Automatisierungsanlage.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Integrieren einer Maschine (2) bzw. eines Moduls, die bzw. das wenigstens eine industrielle Automatisierungsaufgabe ausführen kann bzw. ausführt, in ein überlagertes Orchestrierungs-System (1), insbesondere zur Laufzeit, bei dem
a) für eine in ein Orchestrierungs-System (1) zu integrierende Maschine (2) bzw. ein in ein Orchestrierungs-System zu integrierendes Modul ein Plugin (4) bereitgestellt wird, das einerseits für die Maschine (2) bzw. das Modul und andererseits für die Ausgestaltung und/oder Einrichtung des Orchestrierungs-Systems (1) spezifisch und dazu ausgebildet ist, gegebenenfalls im Anschluss an eine Parametrierung und/oder Konfigurierung durch einen Benutzer, eine Anpassung zwischen einer der Maschine (2) oder dem Modul zugeordneten Maschinen-Schnittstelle (9) und einer dem Orchestrierungs-System (1) zugeordnete System-Schnittstelle (5) zu realisieren,
b) das Plugin (4) ausgeführt wird, und von dem Plugin (4) wenigstens ein für die Maschine (2) bzw. das Modul spezifischer Zustand (15) in wenigstens einen für die Ausgestaltung und/oder Einrichtung des Orchestrierungs-Systems (1) spezifischen Zustand (11 12, 13) konvertiert wird und/oder umgekehrt,
und/oder von dem Plugin (4) wenigstens eine für die Maschine (2) bzw. das Modul spezifische Datenstruktur in wenigstens eine für die Ausgestaltung und/oder Einrichtung des Orchestrierungs-Systems (1) spezifische Datenstruktur konvertiert wird und/oder umgekehrt,
und/oder von dem Plugin (4) für die Maschine (2) bzw. das Modul spezifische Kommunikationsparadigmen auf für die Ausgestaltung und/oder Einrichtung des Orchestrierungs-Systems (1) spezifische Kommunikationsparadigmen abgebildet werden,
und/oder von dem Plugin (4) eine Funktionsschnittstelle, die Funktionsaufrufe des Orchestrierungs-Systems (1) in Funktionsaufrufe für die Maschine (2) bzw. das Modul übersetzt und/oder umgekehrt, implementier wird.

2. Verfahren nach Anspruch 1,
**dadurch gekennzeichnet, dass**
- in Schritt a) eine Plugin-Bibliothek (6) mit mehreren Plugins (4, 7, 8) bereitgestellt wird, wobei für zwei oder mehr der Plugins (4, 7, 8) der Bibliothek (6) gilt, dass sie einerseits für die zu integrierende Maschine (2) bzw. das zu integrierende Modul und andererseits jeweils für ein anders ausgebildetes und/oder eingerichtetes Orchestrierungs-System (1) spezifisch und dazu ausgebildet sind, gegebenenfalls im Anschluss an eine Parametrierung und/oder Konfigurierung durch einen Benutzer, eine Anpassung zwischen einer der Maschine (2) oder dem Modul zugeordneten Maschinen-Schnittstelle (9) und einer dem jeweiligen Orchestrierungs-System (1) zugeordneten System-Schnittstelle (5) zu realisieren, und
- in Schritt b) von den für die zu integrierende Maschine (2) bzw. für das integrierende Modul spezifischen Plugins (4, 7, 8) der Bibliothek (6) dasjenige Plugin (4) ausgeführt wird, welches für das Orchestrierungs-System (1) spezifisch ist, in das die Maschine bzw. das Modul zu integrieren ist.

3. Verfahren nach Anspruch 1 oder 2,
**dadurch gekennzeichnet, dass**
die Maschine (2) oder das Modul Fähigkeiten (15) umfasst, die von Fähigkeiten (11, 12, 13) abweichen, die gemäß der Ausgestaltung und/oder Einrichtung des Orchestrierungs-Systems (1), insbesondere gemäß einem von dem Orchestrierungs-System (1) genutzten Standard, insbesondere Integrationsstandard vorgesehen sind.

4. Verfahren nach einem der vorhergehenden Ansprüche,
**dadurch gekennzeichnet, dass**
es sich bei der Maschine (2) bzw. dem Modul um eine intelligente Maschine bzw. ein intelligentes Modul handelt, welche bzw. welches dazu ausgebildet und/oder eingerichtet ist, in einem vorgegebenen Entscheidungsrahmen autonom Entscheidungen, welche wenigstens eine von der Maschine bzw. dem Modul auszuführende Automatisierungsaufgabe betreffen, treffen zu können.

5. Verfahren nach einem der vorhergehenden Ansprüche,
**dadurch gekennzeichnet, dass**
in Schritt b) das Plugin im Ablaufkontext des Orchestrierungs-Systems (1) ausgeführt wird.

6. Verfahren nach einem der vorhergehenden Ansprüche,
**dadurch gekennzeichnet, dass**
vor der in Schritt b) erfolgenden Ausführung des Plugins (4) eine Parametrierung und/oder Konfigurierung des Plugins (4) durch einen Benutzer erfolgt, bevorzugt, indem ein Benutzer in einer Eingabemaske wenigstens einen Parameter eingibt und/oder aus einer angebotenen Auswahl auswählt.

7. Verfahren nach einem der vorhergehenden Ansprüche,
**dadurch gekennzeichnet, dass**
in Schritt b) das Plugin (4) eine Anpassung zwischen einer zur Laufzeit genutzten System-Schnittstelle (5) des Orchestrierungs-Systems (1) und einer zur Laufzeit genutzten insbesondere proprietären Maschinen-Schnittstelle (9) der Maschine (2) bzw. des Moduls realisiert.

8. Verfahren nach einem der vorhergehenden Ansprüche,
**dadurch gekennzeichnet, dass**
in Schritt b) das Plugin (4) eine Anpassung zwischen einer standardisierten Schnittstelle (5) des Orchestrierungs-Systems (1), insbesondere einer gemäß einer OPC UA Companion Spezifikation oder einem der Standards VDI 2860 oder ISA S95 oder DIN8596-3 oder VDI/VDE/NAMUR 2658 oder OMAC oder Weihenstephan standardisierte System-Schnittstelle (5) und einer insbesondere proprietären Maschinen-Schnittstelle (9) der Maschine (2) bzw. des Moduls realisiert.

9. Verfahren nach einem der vorhergehenden Ansprüche,
**dadurch gekennzeichnet, dass**
in Schritt b) das Plugin (4) für die Maschine (2) bzw. das Modul spezifische Kommunikationsparadigmen auf für die Ausgestaltung und/oder Einrichtung des Orchestrierungs-Systems (1) spezifische Kommunikationsparadigmen abbildet, wobei dies die Abbildung von einer Ereignis-basierten auf eine zyklische Kommunikation einschließt.

10. Verfahren nach einem der vorhergehenden Ansprüche,
**dadurch gekennzeichnet, dass**
in Schritt b) von dem Plugin (4) Prüfungen von Prekonditionen, die bevorzugt erfüllt sein müssen, damit eine Funktion einer zu integrierenden Maschine (2) bzw. eines zu integrierenden Moduls gestartet werden kann, absolviert werden, und/oder in Schritt b) von dem Plugin Prüfungen von Postkonditionen, die bevorzugt erfüllt sein müssen, damit eine Funktion einer zu integrierenden Maschine (2) bzw. eines zu integrierenden Moduls erfolgreich beendet werden kann, absolviert werden.

11. Verfahren nach einem der vorhergehenden Ansprüche,
**dadurch gekennzeichnet, dass**
das oder das jeweilige Plugin (4, 7, 8) EINE semantische Beschreibung umfasst.

12. Verfahren nach einem der vorhergehenden Ansprüche,
**dadurch gekennzeichnet, dass**
es sich bei dem Orchestrierungs-System (1) um ein Steuer- und/oder Managementsystem, insbesondere ein Manufacturing-Execution-System handelt.

13. Schnittstelle zur Integration einer Maschine (2) oder eines Moduls, die bzw. das wenigstens eine industrielle Automatisierungsaufgabe ausführen kann bzw. ausführt, in ein überlagertes Orchestrierungs-System (1), insbesondere zur Laufzeit,
umfassend ein Plugin (4), das einerseits für die Ausgestaltung und/oder Einrichtung eines Orchestrierungs-Systems (1) und andererseits für eine in das Orchestrierungs-System (1) zu integrierende Maschine (2) bzw. ein in das Orchestrierungs-System (1) zu integrierendes Modul spezifisch und dazu ausgebildet ist, gegebenenfalls im Anschluss an eine Parametrierung und/oder Konfigurierung durch einen Benutzer eine Anpassung zwischen einer der Maschine (2) oder dem Modul zugeordneten Maschinen-Schnittstelle (9) und einer dem Orchestrierungs-System (1) zugeordnete System-Schnittstelle (5) zu realisieren,
wobei das Plugin (4) dazu ausgebildet ist,
gegebenenfalls im Anschluss an eine Parametrierung und/oder Konfigurierung durch einen Benutzer,
wenigstens einen für die Maschine (2) bzw. das Modul spezifischer Zustand in wenigstens einen für die Ausgestaltung und/oder Einrichtung des Orchestrierungs-Systems (1) spezifischen Zustand zu konvertieren und/oder umgekehrt,
und/oder von wenigstens eine für die Maschine (2) bzw. das Modul spezifische Datenstruktur in wenigstens eine für die Ausgestaltung und/oder Einrichtung des Orchestrierungs-Systems (1) spezifische Datenstruktur zu konvertieren und/oder umgekehrt,
und/oder von für die Maschine (2) bzw. das Modul spezifische Kommunikationsparadigmen auf für die Ausgestaltung und/oder Einrichtung des Orchestrierungs-Systems (1) spezifische Kommunikationsparadigmen abzubilden,
und/oder eine Funktionsschnittstelle, die Funktionsaufrufe des Orchestrierungs-Systems (1) in Funktionsaufrufe für die Maschine (2) bzw. das Modul übersetzt und/oder umgekehrt, zu implementieren.

14. Schnittstelle nach Anspruch 13,
**dadurch gekennzeichnet, dass**
eine Plugin-Bibliothek (6) mit mehreren Plugins (4, 7, 8) vorgesehen ist, wobei für zwei oder mehr der Plugins (4, 7, 8) der Bibliothek (6) gilt, dass sie einerseits für die gleiche zu integrierende Maschine (2) bzw. das gleiche zu integrierende Modul und andererseits jeweils für ein anders ausgebildet und/oder eingerichtetes Orchestrierungs-System (1) spezifisch sind, und jedes Plugin (4, 7, 8) der Bibliothek (6) dazu ausgebildet ist, gegebenenfalls im Anschluss an eine Parametrierung und/oder Konfigurierung durch einen Benutzer, eine Anpassung zwischen einer einer Maschine (2) oder einem Modul zugeordneten Maschinen-Schnittstelle (9) und einer einem Orchestrierungs-System (1) zugeordneten System-Schnittstelle (5) zu realisieren.

15. Schnittstelle nach Anspruch 13 oder 14,
**dadurch gekennzeichnet, dass**
das oder jedes Plugin (4, 7, 8) Informationen über Fähigkeiten (15) der zu integrierenden Maschine (2) oder des zu integrierenden Moduls umfasst, die von Fähigkeiten (11, 12, 13) abweichen, die gemäß der Ausgestaltung und/oder Einrichtung des oder des jeweiligen Orchestrierungs-Systems (1), insbesondere gemäß einem von dem oder dem jeweiligen Orchestrierungs-System (1) genutzten Standard vorgesehen sind.

16. Schnittstelle nach einem der Ansprüche 13 bis 15,
**dadurch gekennzeichnet, dass**
eine System-Schnittstelle (5) eines Orchestrierungs-Systems (1) vorgesehen ist, die bevorzugt eine standardisierte Laufzeit-Schnittstelle, insbesondere gemäß einer OPC UA Companion Spezifikation oder einem der Standards VDI 2860 oder ISA S95 oder DIN8596-3 oder VDI/VDE/NAMUR 2658 oder OMAC oder Weihenstephan ist, und/oder der Basistreiber ein Treiber für standardisierte Schnittstellen-Strukturen, bevorzugt für auf einer OPC UA Companion Spezifikation oder auf einem der Standards VDI 2860 oder ISA S95 oder DIN8596-3 oder VDI/VDE/NAMUR 2658 oder OMAC oder Weihenstephan basierende standardisierte Schnittstellen-Strukturen ist.

17. Schnittstelle nach einem der Ansprüche 13 bis 16,
**dadurch gekennzeichnet, dass**
wenigstes ein Indikator-Element vorgesehen ist, über welches eine Maschine (2) bzw. ein Modul einem Orchestrierungs-System (1) mitteilen kann, ob Pre- und/oder Postkonditionen einer Fähigkeit der Maschine (2) bzw. des Moduls erfüllt sind, und/oder dass das oder jedes Plugin (4, 7, 8) Prüfungen von Prekonditionen, die bevorzugt erfüllt sein müssen, damit eine Funktion einer zu integrierenden Maschine (2) bzw. eines zu integrierenden Moduls gestartet werden kann, implementieren, und/oder das oder jedes Plugin (4, 7, 8) Prüfungen von Postkonditionen, die bevorzugt erfüllt sein müssen, damit eine Funktion einer zu integrierenden Maschine (2) bzw. eines zu integrierenden Moduls erfolgreich beendet werden kann, implementieren.

18. Schnittstelle nach einem der Ansprüche 13 bis 17,
**dadurch gekennzeichnet, dass**
das oder jedes Plugin (4, 7, 8) dazu ausgebildet ist, gegebenenfalls im Anschluss an eine Parametrierung und/oder Konfigurierung durch einen Benutzer, für eine zu integrierende Maschine (2) bzw. ein zu integrierendes Modul spezifische Kommunikationsparadigmen auf für die Ausgestaltung und/oder Einrichtung des jeweiligen Orchestrierungs-System (1) spezifische Kommunikationsparadigmen abzubilden, wobei dies die Abbildung von einer Ereignis-basierten auf eine zyklische Kommunikation einschließt.

19. Schnittstelle nach einem der Ansprüche 13 bis 18,
**dadurch gekennzeichnet, dass**
das oder jedes Plugin (4, 7, 8) dazu ausgebildet ist, gegebenenfalls im Anschluss an eine Parametrierung und/oder Konfigurierung durch einen Benutzer, eine Anpassung einer zur Laufzeit genutzten insbesondere standardisierten System-Schnittstelle (5) des oder des jeweiligen Orchestrierungs-Systems (1) an eine zur Laufzeit genutzte insbesondere proprietäre Maschinen-Schnittstelle (9) der zu integrierenden Maschine (2) bzw. des zu integrierenden Moduls zu realisieren.

20. Orchestrierungs-System (1) für eine industrielle Automatisierungsanlage umfassend wenigstens eine Schnittstelle nach einem der Ansprüche 13 bis 19.

21. Maschine oder Modul zum Ausführen wenigstens einer industrielle Automatisierungsaufgabe umfassend wenigstens eine Schnittstelle nach einem der Ansprüche 13 bis 19.

22. Industrielle Automatisierungsanlage umfassend ein Orchestrierungs-System (1) und wenigstens eine Maschine (2) und/oder wenigstens ein Modul, die bzw. das über eine Schnittstelle (3) gemäß einem der Ansprüche 13 bis 19 in das Orchestrierungs-System (1) integriert ist.

23. Computerprogramm umfassend Programmcode-Mittel zur Durchführung des Verfahrens nach einem der Ansprüche 1 bis 12.

24. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 12 durchzuführen.
